(19) Europäisches Patentamt
European Patent Office
Office européen des brevets

(11) **EP 4 530 142 A1**

(12) **EUROPEAN PATENT APPLICATION**
published in accordance with Art. 153(4) EPC

(43) Date of publication:
**02.04.2025 Bulletin 2025/14**

(21) Application number: **22943018.6**

(22) Date of filing: **23.05.2022**

(51) International Patent Classification (IPC):
**B60W 40/09** (2012.01)

(52) Cooperative Patent Classification (CPC):
**B60W 40/09**

(86) International application number:
**PCT/CN2022/094524**

(87) International publication number:
**WO 2023/225811 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventors:
• **CHEN, Boyi**
**Shenzhen, Guangdong 518129 (CN)**
• **HU, Wenxiao**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR ASSISTING WITH DRIVING, AND VEHICLE**

(57)     Embodiments of this application provide a driving assistance method and apparatus, and a vehicle. The method includes: obtaining a real-time travelling parameter and surrounding environment information of a vehicle when a driver drives the vehicle; determining a driving habit of the driver based on the real-time travelling parameter and the surrounding environment information; and prompting the driver with driving reminder information when the driving habit satisfies a first preset condition. The driving assistance method in embodiments of this application may be applied to a new energy vehicle or an intelligent vehicle, so that the driving habit of the driver can be determined in real time when the driver drives the vehicle, and then a targeted driving reminder is provided based on the driving habit of the driver. This can help a driver who has a poor driving habit learn and/or consolidate precautions that need to be taken in a driving process, help the driver form a good driving habit, and further help improve driving safety.

**800**

S801: Obtain a real-time travelling parameter and surrounding environment information of a vehicle when a driver drives the vehicle

↓

S802: Determine a driving habit of the driver based on the real-time travelling parameter and the surrounding environment information

↓

S803: Prompt the driver with driving reminder information when the driving habit satisfies a first preset condition

FIG. 8

## Description

## TECHNICAL FIELD

This application relates to the field of intelligent driving, and more specifically, to a driving assistance method and apparatus, and a vehicle.

## BACKGROUND

With upgrade of a chip and algorithm performance, an intelligent driving function develops towards fully automated driving. However, due to a plurality of restrictions on implementation of fully automated driving, shared autonomy becomes the development normal of intelligent driving. A human-machine collaborative co-driving vehicle can better cope with road risks, to obtain better driving experience. In a human driving mode, most traffic violations are caused by incorrect driving habits. It is difficult for a driver to form good driving habits and always keep the good driving habits when the driver grows out of a novice into a skilled driver.

In view of this, a driving assistance method and apparatus, and a vehicle need to be developed urgently.

## SUMMARY

This application provides a driving assistance method and apparatus, and a vehicle, to identify drivers who have different driving habits, and provide an adaptive reminder based on the driving habits of the drivers, thereby improving driving experience of the drivers and improving driving safety.

A vehicle (sometimes briefly referred to as a car) in this application is a vehicle in a broad sense, and may be a transportation means (for example, an automobile, a truck, a motorcycle, a train, an airplane, or a ship), an industrial vehicle (for example, a pallet truck, a trailer, or a tractor), an engineering vehicle (for example, an excavator, a bulldozer, or a crane), agricultural equipment (for example, a lawn mower or a harvester), amusement equipment, a toy vehicle, or the like. A type of the vehicle is not limited in this application.

According to a first aspect, a driving assistance method is provided. The method may be performed by a vehicle, or may be performed by a vehicle-mounted terminal like an in-vehicle infotainment of a vehicle, or may be performed by a chip or a circuit used for a vehicle. This is not limited in this application. For ease of description, the following provides description by using an example in which the method is performed by an apparatus. It should be understood that the apparatus may be disposed in a vehicle-mounted terminal, or may be disposed in another hardware device. This is not specifically limited in this application.

The method may include: obtaining a real-time travelling parameter and surrounding environment information of a vehicle when a driver drives the vehicle; determining a driving habit of the driver based on the real-time travelling parameter and the surrounding environment information; and prompting the driver with driving reminder information when the driving habit satisfies a first preset condition.

In the foregoing technical solution, the driving habit of the driver can be determined based on the vehicle travelling parameter and surrounding environment data of the vehicle that are obtained in real time when the driver drives the vehicle. It should be understood that the driving habit is a driving behavior or driving tendency that is of the driver and that is gradually developed in a long-time driving activity and is not easily changed for a moment. Further, whether to provide a driving reminder in a driving process of the vehicle may be determined based on the driving habit of the driver. This helps a driver who has a poor driving habit improve a driving behavior. Particularly, in the field of shared vehicles, a driver who uses a vehicle may be different each time, and accordingly, has a different driving habit. In this case, driving data is obtained in real time, to determine a driving habit of a driver and prompt a driver who has a poor driving habit with driving reminder information. This can help the driver who has a poor driving habit learn and/or consolidate precautions that need to be taken in a driving process, help the driver form a good driving habit, and further help improve driving safety.

It should be noted that the real-time driving data may include driving data that is obtained from a moment at which the driver starts the vehicle in a current trip of the vehicle, or may include driving data that is obtained from a first moment, where the first moment is a moment later than a current moment by preset duration. For example, the preset duration may be 20 minutes, or may be 40 minutes, or may be other duration.

For example, the real-time travelling parameter includes but is not limited to: a vehicle speed, a vehicle acceleration rate, a gas pedal position during acceleration, a vehicle deceleration rate, a brake pedal position during deceleration, a steering wheel angle and a turning rate during steering, and parking duration. The surrounding environment information includes but is not limited to: road information (for example, congestion, a pedestrian around, a curve, and a traffic sign) and surrounding vehicle information (for example, a distance from a front vehicle).

In some possible implementations, it may be determined, based on the real-time travelling parameter of the vehicle and the surrounding environment information of the vehicle, whether speeding, non-yielding, an excessively close distance from a front vehicle, a temporary parking violation, and a traffic regulation violation occur in a travelling process. Then, the driving habit of the driver is determined based on weights of speeding, non-yielding, excessively close distance from a front vehicle, a temporary parking violation, and a traffic regulation violation.

In some possible implementations, the driving habit of the driver may be represented based on a driving habit score. For example, the driving habit score is as follows: $Score_{(Driving\ Habits)} = a_1 + a_2 + a_3 + a_4 + a_5$, where $a_1$ to as respectively represent weights of a vehicle speed, yielding, an inter-vehicle distance, temporary parking, and traffic regulations, a value of each of $a_1$ to $a_5$ may be any real number between 0 and 1, and a smaller $Score_{(Driving\ Habits)}$ indicates a worse driving habit. In the foregoing case, that "the driving habit satisfies a first preset condition" may include: $Score_{(Driving\ Habits)}$ is less than a first preset threshold, where the first preset threshold represents a good driving habit score, for example, a value like 3 or 4. For another example, the driving habit score is as follows: $Score_{(Driving\ Habits)} = a_1 + a_2 + a_3 + a_4 + a_5 + a_6$, where $a_6$ represents a weight of another driving behavior, for example, a forward collision warning (forward collision warning, FCW) or a quantity of forced ADAS disengagement (forced ADAS disengagement) times, and a value of $a_6$ may be any real number between 0 and 1. In the foregoing case, that "the driving habit satisfies a first preset condition" may include: $Score_{(Driving\ Habits)}$ is less than a second preset threshold, where the second preset threshold represents a good driving habit score, for example, a value like 4 or 5.

With reference to the first aspect, in some implementations of the first aspect, the method further includes: determining driving experience of the driver based on the real-time travelling parameter. The prompting the driver with driving reminder information when the driving habit satisfies a first preset condition includes: prompting the driver with the driving reminder information when the driving habit satisfies the first preset condition and the driving experience satisfies a second preset condition.

It should be understood that the driving experience represents a proficiency degree and/or a driving age of the driver in driving a vehicle.

In some possible implementations, the driving experience of the driver is determined based on at least one of acceleration data, deceleration data, and turning data generated in a process in which the driver drives the vehicle. For example, that "the driving experience satisfies a second preset condition" may include at least one of the following: Deceleration data in a process in which the driver drives the vehicle falls within a range that represents insufficient driving experience and that is in a deceleration Gaussian model; acceleration data in a process in which the driver drives the vehicle falls within a range that represents insufficient driving experience and that is in an acceleration Gaussian model; and turning data in a process in which the driver drives the vehicle falls within a range that represents insufficient driving experience and that is in a steering Gaussian model.

In some possible implementations, the driving experience of the driver may be further determined based on the real-time travelling parameter and the surrounding environment data. For example, the driving experience of the driver is determined based on a parking space type in the surrounding environment data and parking duration in the process in which the driver drives the vehicle. That "the driving experience satisfies a second preset condition" may include the following: The parking duration is in a last x% of an interval of duration required for parking in a parking space of this type, where a value of x may be 50, 60, or another value. In still another example, brake smoothness of the vehicle on a road section may be determined based on the brake pedal position and the brake action duration in the real-time travelling parameter. Further, the driving experience of the driver may be determined based on the road information in the surrounding environment data and the brake smoothness. That "the driving experience satisfies a second preset condition" may include the following: If deceleration smoothness of the ego vehicle in the current driving is in a last y% of a value interval of deceleration smoothness on the current road section, a value of x may be 50, 60, or another value.

In the foregoing technical solution, the driver who has a poor driving habit and insufficient driving experience is prompted with the driving reminder information. This helps the driver learn and/or consolidate driving experience, assists the driver in forming a good driving habit and improving driving experience, and further helps improve driving safety.

With reference to the first aspect, in some implementations of the first aspect, the method further includes: prompting the driver with vehicle speed reminder information when it is detected that a vehicle speed of the vehicle exceeds a preset vehicle speed, where the vehicle speed reminder information reminds the driver of deceleration and/or a recommended vehicle speed; and/or prompting the driver with yielding indication information when another road user is detected, where the yielding indication information reminds the driver to yield to the another road user; and/or prompting the driver with inter-vehicle distance reminder information when a distance between the vehicle and a front vehicle is less than or equal to a preset distance, where the inter-vehicle distance reminder information reminds the driver to keep an inter-vehicle distance and/or reminds the driver of a recommended inter-vehicle distance; and/or prompting the driver with temporary parking reminder information when it is detected that the vehicle enters a restricted parking area, where the temporary parking reminder information reminds the driver of the restricted parking area and/or parking duration; and/or prompting the driver with driving observation reminder information when at least one of lane change of the vehicle, deceleration of the vehicle, another vehicle behind the vehicle, and an obstacle on a driving road is detected, where the driving observation reminder information prompts the driver to observe violation reminder information around the vehicle.

In some possible implementations, in different road scenarios, an allowed vehicle speed on a road or a vehicle speed required for safe driving is different. In this case, whether the vehicle is speeding may be determined based on the road scenario. When it is determined that the vehicle is speeding, the driver is prompted with the vehicle speed reminder information. For example, in low visibility weather like rainy, snowy, or foggy days, if it is detected that the speed of the vehicle exceeds a preset speed, the driver is prompted with deceleration and/or the driver is prompted with a recommended vehicle speed on the road. Alternatively, when there is a pedestrian around the road and/or the vehicle travels to a curve, if it is detected that the speed of the vehicle exceeds a preset speed, the driver is prompted with deceleration and/or the driver is prompted with a recommended vehicle speed on the road. Alternatively, when it is detected that the vehicle changes a lane and enters a main road, if it is detected that the speed of the vehicle exceeds a preset speed, the driver is prompted with deceleration and/or the driver is prompted with a recommended vehicle speed on the road.

In some possible implementations, the driver may be further prompted with information such as a recommended gas pedal amplitude and frequency, and a recommended brake amplitude and frequency.

In some possible implementations, the another road user may include a vulnerable road user (vulnerable road user, VRU), for example, a pedestrian, a bicycle, or an electric vehicle. Alternatively, the another road user may include a special vehicle, for example, a police car, a firefighting truck, an ambulance, an engineering rescue vehicle, or a school bus. Alternatively, the another road user may include another road user other than the ego vehicle in some scenarios. In some possible implementations, when another road user is detected in some scenarios, yielding prompt information is provided. For example, at an intersection without a traffic signal light, a traffic sign, or a marking line, when it is detected that a vehicle travels from a right side of the ego vehicle to a left side of the ego vehicle on a road perpendicular to that of the ego vehicle, the driver is reminded to yield to the another road user.

For example, the driver may be prompted with the foregoing information by using one or more of devices such as a vehicle-mounted screen, a human machine interface (human machine interface, HMI), a head-up display, and an audio and video system.

In some possible implementations, the obstacle on the driving road includes an object that affects determining performed by a driver on a road condition, and includes but is not limited to: one or more vehicles parked on both sides of a road, another vehicle on a congested road, and another object that affects a sight line of the driver.

In the foregoing technical solution, the driver is reminded of different driving reminder information based on different driving scenarios. This helps the driver accumulate driving experience and/or improve a driving habit based on different scenarios. In addition, this helps improve driving safety.

With reference to the first aspect, in some implementations of the first aspect, the method further includes: when a current trip ends, prompting data of non-standard driving occurring in the current trip, and/or prompting a result of comparison between the data of non-standard driving occurring in the current trip and data of non-standard driving occurring in a historical trip.

For example, the data of non-standard driving includes a behavior of non-standard driving and/or a quantity of non-standard driving times.

For example, the driver may be prompted with the foregoing information by using one or more of devices such as a vehicle-mounted screen, a vehicle-mounted audio and video device, and a head-up display.

In some possible implementations, if there is no non-standard driving behavior in a trip process, only a trip route may be displayed, and/or a quantity of times that the driver completes a standard driving trip may be displayed, to motivate the driver to continue to keep a good driving habit.

In the foregoing technical solution, driving behavior summarization is performed at the end of a driving trip, to help the driver understand driving performance of the driver and deepen an impression. This promotes the driver to form a good driving habit and keep safe driving vigilance.

With reference to the first aspect, in some implementations of the first aspect, the non-standard driving includes at least one of the following: the distance between the vehicle and the front vehicle is less than or equal to the preset distance, non-yielding to another road user, a parking violation, speeding, and a traffic regulation violation.

With reference to the first aspect, in some implementations of the first aspect, when the vehicle travels to a first road section, and intelligent driving is supported on the first road section, the method further includes: prompting the driver to switch the vehicle to an intelligent driving mode.

For example, the intelligent driving mode of the vehicle may be a mode in which the vehicle completes, under control of an intelligent system (instead of human labor), driving behaviors such as lane keeping, overtaking and lane merging, stopping at a red light and travelling at a green light, and interaction between light and horn sound. Alternatively, the intelligent driving mode may be a mode in which a driving behavior of the vehicle is mainly controlled and completed by an intelligent system. It should be understood that, in the latter case, manual intervention on the driving behavior is allowed. In other words, the driver may make corresponding reactions to actual road conditions under a series of prompts of the intelligent system.

In some possible implementations, when the vehicle is about to travel to a road section on which intelligent driving is not supported, the driver is prompted in a timely manner to take over the vehicle.

In the foregoing technical solution, the driver is supported in switching the vehicle from a manual control mode to an intelligent driving mode. This helps reduce driving burden of the driver.

With reference to the first aspect, in some implementations of the first aspect, before the prompting the driver with driving reminder information, the method further includes: determining the driving reminder information based on the surrounding environment information.

With reference to the first aspect, in some implementations of the first aspect, the real-time travelling parameter includes a yielding parameter, and the yielding parameter represents a behavior of yielding to another road user by the vehicle in the current trip.

In the foregoing technical solution, a driving habit of the driver is evaluated by introducing the yielding parameter in the driving process. This helps reduce a threat posed to traffic safety by a driver who lacks a yielding driving habit.

According to a second aspect, a driving assistance apparatus is provided. The apparatus includes: an obtaining unit, configured to obtain a real-time travelling parameter and surrounding environment information of a vehicle when a driver drives the vehicle; a processing unit, configured to determine a driving habit of the driver based on the real-time travelling parameter and the surrounding environment information; and a prompting unit, configured to prompt the driver with driving reminder information when the driving habit satisfies a first preset condition.

With reference to the second aspect, in some implementations of the second aspect, the processing unit is further configured to determine driving experience of the driver based on the real-time travelling parameter. The prompting unit is specifically configured to prompt the driver with the driving reminder information when the driving habit satisfies the first preset condition and the driving experience satisfies a second preset condition.

With reference to the second aspect, in some implementations of the second aspect, the prompting unit is further configured to: prompt the driver with vehicle speed reminder information when it is detected that a vehicle speed of the vehicle exceeds a preset vehicle speed, where the vehicle speed reminder information reminds the driver of deceleration and/or a recommended vehicle speed; and/or prompt the driver with yielding indication information when another road user is detected, where the yielding indication information reminds the driver to yield to the another road user; and/or prompt the driver with inter-vehicle distance reminder information when a distance between the vehicle and a front vehicle is less than or equal to a preset distance, where the inter-vehicle distance reminder information reminds the driver to keep an inter-vehicle distance and/or reminds the driver of a recommended inter-vehicle distance; and/or prompt the driver with temporary parking reminder information when it is detected that the vehicle enters a restricted parking area, where the temporary parking reminder information reminds the driver of the restricted parking area and/or parking duration; and/or prompt the driver with driving observation reminder information when at least one of lane change of the vehicle, deceleration of the vehicle, another vehicle behind the vehicle, and an obstacle on a driving road is detected, where the driving observation reminder information prompts the driver to observe violation reminder information around the vehicle.

With reference to the second aspect, in some implementations of the second aspect, the prompting unit is further configured to: when a current trip ends, prompt data of non-standard driving occurring in the current trip, and/or prompt a result of comparison between the data of non-standard driving occurring in the current trip and data of non-standard driving occurring in a historical trip.

With reference to the second aspect, in some implementations of the second aspect, the non-standard driving includes at least one of the following: the distance between the vehicle and the front vehicle is less than or equal to the preset distance, non-yielding to another road user, a parking violation, speeding, and a traffic regulation violation.

With reference to the second aspect, in some implementations of the second aspect, when the vehicle travels to a first road section, and intelligent driving is supported on the first road section, the prompting unit is further configured to prompt the driver to switch the vehicle to an intelligent driving mode.

With reference to the second aspect, in some implementations of the second aspect, the processing unit is further configured to: before the prompting the driver with driving reminder information, determine the driving reminder information based on the surrounding environment information.

With reference to the second aspect, in some implementations of the second aspect, the real-time travelling parameter includes a yielding parameter, and the yielding parameter represents a behavior of yielding to another road user by the vehicle in the current trip.

According to a third aspect, a driving assistance apparatus is provided. The apparatus includes: a memory, configured to store a program; and a processor, configured to execute the program stored in the memory. When the program stored in the memory is executed, the processor is configured to perform the method in any one of the possible implementations of the first aspect.

According to a fourth aspect, a driver assistant is provided, where the driver assistant includes one of a virtual image and a physical image. The driver assistant includes at least one processor, configured to perform the method in any one of the possible implementations of the first aspect. The driver assistant may be carried on at least one of a vehicle-mounted screen, a head-up display HUD, a vehicle-mounted voice apparatus, and a cockpit.

It should be noted that the driver assistant in this embodiment of this application may include a virtual image, or may be a physical product. The virtual image may include a virtual digital human or another virtual image carried on the vehicle-mounted screen or the head-up display HUD, or may include a virtual voice assistant carried in the vehicle-mounted voice apparatus. The physical product may include a vehicle-mounted robot carried in the cockpit, or the like.

According to a fifth aspect, an advanced driver assistance system is provided. The system includes the apparatus in any one of the possible implementations of the second aspect or the third aspect, or the driver assistant in any one of the implementations of the fourth aspect.

According to a sixth aspect, an intelligent vehicle is provided. The intelligent vehicle includes the apparatus in any one of the possible implementations of the second aspect or the third aspect, or the driver assistant in any one of the implementations of the fourth aspect, or the system in any one of the implementations of the fifth aspect.

According to a seventh aspect, a computer program product is provided. The computer program product includes computer program code, and when the computer program code is run on a computer, the computer is enabled to perform the method in any one of the possible implementations of the first aspect.

It should be noted that all or some of the computer program code may be stored in a first storage medium. The first storage medium may be encapsulated together with a processor, or may be encapsulated separately from a processor. This is not specifically limited in this embodiment of this application.

According to an eighth aspect, a computer-readable storage medium is provided. The computer-readable storage medium stores program code. When the computer program code is run on a computer, the computer is enabled to perform the method in any one of the possible implementations of the first aspect.

According to a ninth aspect, a chip is provided. The chip includes a processor, configured to invoke a computer program or computer instructions stored in a memory, so that the processor performs the method in any one of the possible implementations of the first aspect.

With reference to the ninth aspect, in a possible implementation, the processor is coupled to the memory through an interface.

With reference to the ninth aspect, in a possible implementation, the chip system further includes a memory. The memory stores a computer program or computer instructions.

## BRIEF DESCRIPTION OF DRAWINGS

FIG. 1 is a schematic functional block diagram of a vehicle according to an embodiment of this application;
FIG. 2 is a schematic diagram of a system architecture required for implementing a driving assistance method according to an embodiment of this application;
FIG. 3 is a schematic flowchart of a driving assistance method according to an embodiment of this application;
FIG. 4 is a schematic diagram of a deceleration rate Gaussian model according to an embodiment of this application;
FIG. 5 is a schematic diagram of an application scenario of a driving assistance method according to an embodiment of this application;
FIG. 6 is another schematic diagram of an application scenario of a driving assistance method according to an embodiment of this application;
FIG. 7 is still another schematic diagram of an application scenario of a driving assistance method according to an embodiment of this application;
FIG. 8 is another schematic flowchart of a driving assistance method according to an embodiment of this application;
FIG. 9 is a schematic block diagram of a driving assistance apparatus according to an embodiment of this application; and
FIG. 10 is another schematic block diagram of a driving assistance apparatus according to an embodiment of this application.

## DESCRIPTION OF EMBODIMENTS

The following describes the technical solutions in embodiments of this application with reference to the accompanying drawings in embodiments of this application. In description of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are used only to distinguish between different described objects, and do not limit a location, a sequence, a priority, a quantity, content, or the like of the described objects. In embodiments of this application, use of a prefix word like an ordinal number for distinguishing a described object does not constitute a limitation on the described object. For a description of the described object, refer to a description of the context in the claims or embodiments. The use of such a prefix word should not constitute a redundant limitation. In addition, in the descriptions of embodiments, unless otherwise specified, "a plurality of" means two or more than two.

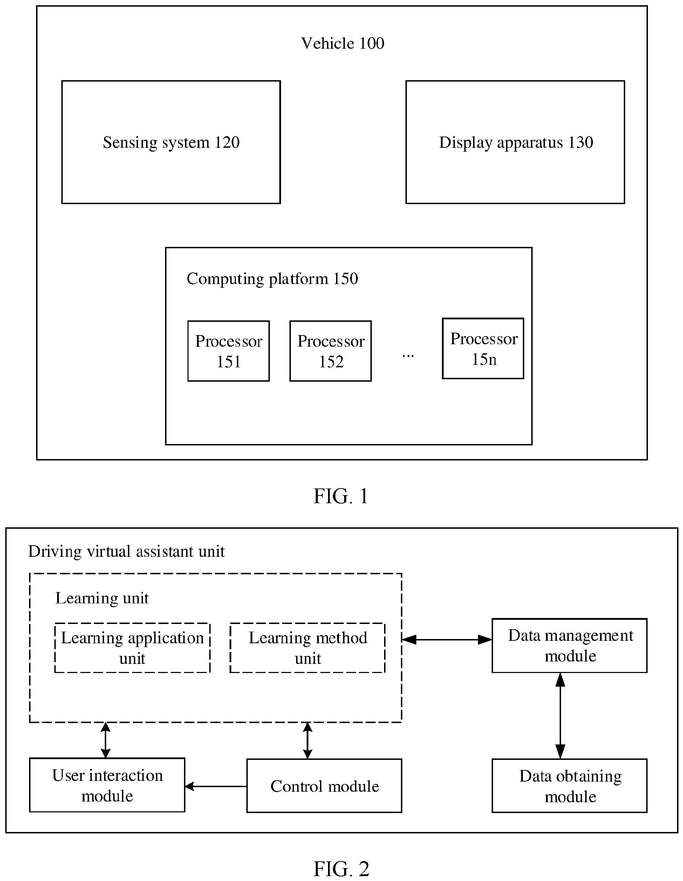

FIG. 1 is a schematic functional block diagram of a vehicle 100 according to an embodiment of this application. The vehicle 100 may include a sensing system 120, a display apparatus 130, and a computing platform 150. The sensing system 120 may include several types of sensors that sense surrounding environment information of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit, for example, a field programmable gate array (field programmable gate array, FPGA), that is implemented by using an application-specific integrated circuit (application-specific integrated circuit, ASIC) or a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The display apparatus 130 in a cockpit is mainly classified into two types. The first type is a vehicle-mounted display, and the second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital instrument display, a central control screen, a display in front of a passenger (also referred to as a front-row passenger) in a front passenger seat, a display in front of a passenger in a left back row, and a display in front of a passenger in a right back row. Even, a vehicle window may be used as a display for display. The head-up display is also referred to as a head-up display system. The head-up display is mainly configured to display driving information such as a speed and navigation on a display device (for example, a windshield) in front of a driver, to reduce sight transfer time of the driver, avoid a pupil change caused by sight transfer of the driver, and improve driving safety and comfort. For example, the HUD includes a combiner-HUD (combiner-HUD, C-HUD) system, a windshield-HUD (windshield-HUD, W-HUD) system, and an augmented reality-HUD (augmented reality-HUD, AR-HUD) system. In some possible implementations, the vehicle-mounted display may include an HMI.

As mentioned above, most traffic violations are caused by incorrect driving habits. When the driver grows out of a novice into a skilled driver, if there is no support or assistance from a vehicle side, it is difficult to learn skills, and it is difficult to form good driving habits and always keep the good driving habits. In all driving scenarios, there is no adaptive reminder mechanism for drivers who have different driving habits and familiarity degrees with vehicles. In view of this, embodiments of this application provide a driving assistance method and apparatus, and a vehicle, to obtain driving data of a driver in real time, determine, based on the driving data, whether to provide a driving reminder, and determine reminder content based on vehicle surrounding environment information and/or vehicle driving status data. This can help a driver who has a poor driving habit and/or insufficient driving experience learn and/or consolidate driving experience, improve driving experience of the driver, and further help improve driving safety.

FIG. 2 is a diagram of a system architecture of advanced driver assistance according to an embodiment of this application. As shown in FIG. 2, the advanced driver assistance system includes a driving virtual assistant unit, and the driving virtual assistant unit includes a learning unit, a user interaction module, a control module, a data management module, and a data obtaining module. The data obtaining module may include one or more photographing apparatuses and one or more sensors in the sensing system 120 shown in FIG. 1. The data management module may include one or more memories in the computing platform 150 shown in FIG. 1. The user interaction module may include one or more of the display apparatus 130 in FIG. 1, or the user interaction module may include a voice system. The control module may include one or more processors in the computing platform 150 shown in FIG. 1. The learning unit may include one or more processors in the computing platform 150 shown in FIG. 1. More specifically, the learning unit may include a learning application unit and a learning method unit. In a specific implementation process, the data obtaining module may obtain driving data of a driver, including acceleration data (for example, an acceleration rate (acceleration rate), a gas pedal position (gas pedal position), and a quantity of acceleration adjustment times), deceleration data (for example, a deceleration rate (deceleration rate) and a brake pedal position (brake pedal position)), turning data (for example, a steering wheel angle (steering wheel angle) and a turning rate (turning rate)), manual parking duration, and the like. The data management module may process the driving data, for example, calculate average manual parking duration of the driver. The data management module may further store the data obtained by the data obtaining module. Further, the learning application unit may determine driving experience and a driving habit of the driver based on the driving data, data processed by the data management module, and an algorithm stored in the learning method unit. In addition, the data obtaining module may further obtain vehicle surrounding environment information. The vehicle surrounding environment information includes but is not limited to: road information (for example, congestion, a pedestrian around, a curve, and a traffic sign) and surrounding vehicle information (for example, a distance from a front vehicle). The learning unit may determine, based on the vehicle surrounding environment information and/or vehicle driving status data in the data obtaining module and with reference to the driving experience and the driving habit of the driver, whether to provide a driving reminder and content of the driving reminder. When the driving reminder needs to be provided, the learning unit sends instructions to the control module, so that the control module can control the user interaction module to provide the driving reminder. The driving reminder includes at least one of the following: a vehicle speed reminder, a right-of-way reminder, a driving observation reminder, an inter-vehicle distance reminder, a temporary/prohibited parking reminder, and another driving violation behavior reminder.

In some possible implementations, the advanced driver assistance system (advanced driver assistance system, ADAS) further includes an autonomous driving unit. The autonomous driving unit is connected to one or more sensors in the sensing system shown in FIG. 1. The driving virtual assistant unit may obtain driving data, vehicle surrounding environment information, and the like from the autonomous driving unit. In some possible implementations, a control instruction may be further sent to the autonomous driving unit by using the control module in the driving virtual assistant unit, so that the autonomous driving unit provides a driving reminder.

It should be understood that the foregoing modules and systems are merely examples. In actual application, the foregoing modules and systems may be added or deleted based on an actual requirement. For example, the data management module and the data processing module may be combined into one module, or the learning unit and the control module may be combined into one module.

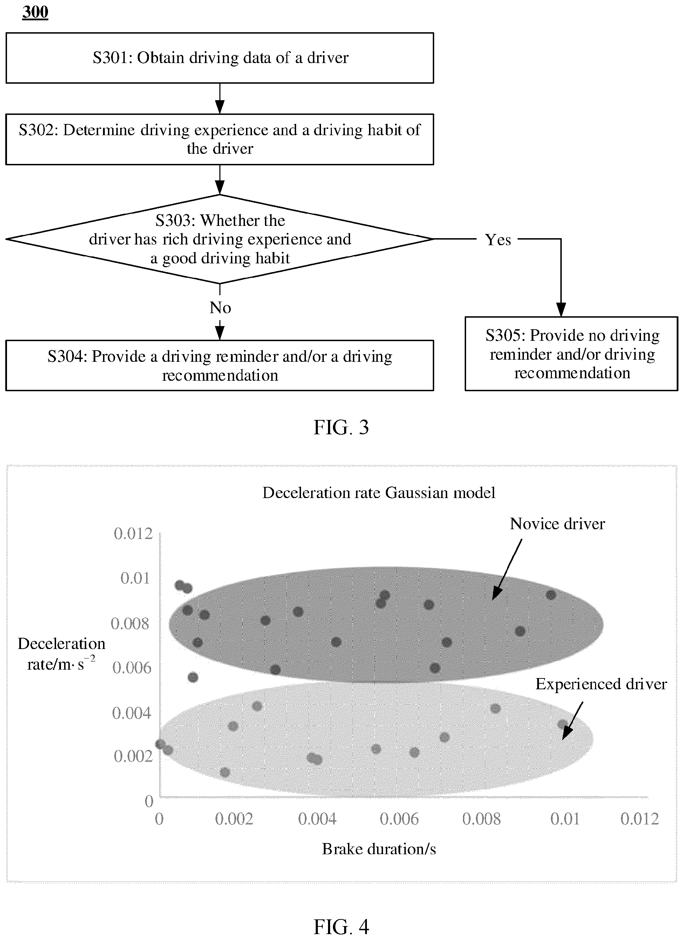

FIG. 3 is a schematic flowchart of a driving assistance method according to an embodiment of this application. The method 300 may be applied to the vehicle shown in FIG. 1, or may be performed by the system shown in FIG. 2. It should be understood that steps or operations of the driving assistance method shown in FIG. 3 are merely examples for description. In this embodiment of this application, other operations or variations of the operations in FIG. 3 may be further performed. The method 300 includes the following steps.

S301: Obtain driving data of a driver.

For example, acceleration data such as an acceleration rate and a gas pedal position, deceleration data such as a deceleration rate and a brake pedal position, turning data such as a steering wheel angle and a turning rate, manual parking duration, and other data are obtained.

For example, a moment at which the driving data of the driver starts to be obtained may be a moment at which the driver starts the vehicle. For example, the driving data may include driving data of a current trip. More specifically, the driving data may include driving data that is obtained from the moment at which the driver starts the vehicle in the current trip, or may include driving data that is obtained from a first moment, where the first moment is a moment later than a current moment by preset duration. For example, the preset duration may be 20 minutes (minutes, min), or may be 40 minutes, or may be other duration.

S302: Determine driving experience and a driving habit of the driver.

In this embodiment of this application, the driving experience and the driving habit represent driving behaviors of the driver. The driving experience represents a proficiency degree and/or a driving age of the driver in driving the vehicle, and the driving habit represents a driving behavior or driving tendency that is of the driver and that is gradually developed in a long-time driving activity and is not easily changed for a moment. It should be understood that a driver who has rich driving experience does not necessarily have a good driving habit, and a driver who has an excellent driving habit does not necessarily have rich driving experience.

In some possible implementations, the driving experience and the driving habit of the driver may be determined based on the driving data of the driver and surrounding environment information in a driving process of the vehicle.

In an example, the driving experience of the driver may be determined based on the manual parking duration. For example, based on a parking space type, an interval of duration required for parking in a parking space of this type is determined. Further, if parking duration in the current trip is in the first x% of the interval of the duration required for parking in the parking space of this type, it is determined that the driver has rich driving experience; otherwise, it is determined that the driver has insufficient driving experience. For example, x may be 50, or may be 60, or may be any real number between 0 and 100.

In another example, the deceleration data, the acceleration data, and the turning data in the driving data are compared with corresponding Gaussian models, to determine the driving experience of the driver.

For example, for the deceleration data, the driving experience of the driver may be determined based on a deceleration rate and brake duration. Specifically, Gaussian distribution of the deceleration data may be determined according to the following formula:

$$f(x) = \frac{1}{\sqrt{2\pi}} \frac{1}{|\Sigma|^{1/2}} \exp\left[-\frac{1}{2}(x-\mu)^T \Sigma^{-1}(x-\mu)\right],$$

where

x is the deceleration data, including the deceleration rate (Deceleration rate) and the brake duration (Brake duration), $\mu$ is an average value, and $\Sigma$ is a covariance matrix; and specifically, $\mu = [\mu_{Deceleration\ rate}, \mu Brake\ duration];$ and

$$\Sigma = \begin{bmatrix} \sigma^2_{Deceleration\ rate} & \sigma_{Deceleration\ rate, Brake\ duration} \\ \sigma_{Brake\ duration, Deceleration\ rate} & \sigma^2_{Deceleration\ rate} \end{bmatrix},$$

where $\sigma$ is a standard deviation, and $\sigma^2$ is a variance.

Further, a deceleration Gaussian model shown in FIG. 4 may be established. An upper ellipse in FIG. 4 represents a driver (for example, a novice driver) who lacks driving experience, and a lower ellipse in FIG. 4 represents a driver who has rich driving experience. The deceleration data in the driving data is compared with the Gaussian model shown in FIG. 4. If the deceleration data falls within the upper ellipse, it indicates that the driver lacks driving experience. If the deceleration data falls within the lower ellipse, it indicates that the driver has rich driving experience.

In some possible implementations, if there are a plurality of groups of deceleration data in the driving data of the current trip, the plurality of groups of deceleration data are separately determined, and further the driving experience of the driver is determined by combining determining results of all the groups of deceleration data. For example, if more than 80% of the deceleration data falls within the upper ellipse, it is determined that the driver has insufficient driving experience; or if more than 80% of the deceleration data falls within the lower ellipse, it is determined that the driver has rich driving experience.

It should be understood that the driving experience of the driver may alternatively be determined by using an acceleration Gaussian model in combination with the acceleration data, or the driving experience of the driver may be determined by using a steering Gaussian model in combination with the turning data.

In some possible implementations, when the driving data of the current trip includes all the acceleration data, the deceleration data, and the turning data, the driving experience of the driver may be determined by combining a result A determined based on the acceleration data, a result D determined based on the deceleration data, and a result T determined based on the turning data. Herein, A, D, and T may be separately set to 0 or 1. When A, D, and T are set to 1, it indicates that the determining result is that "the driver has rich driving experience". When A, D, and T are set to 0, it indicates that "the driver has insufficient driving experience". For example, a final result of the driving experience satisfies the following: $E_1 = a \times A + b \times D + c \times T$, where a, b, and c are respectively weights of the result A determined based on the acceleration data, the result D determined based on the deceleration data, and the result T determined based on the turning data. For example, a, b, and c may be respectively set to 0.4, 0.3, and 0.3. In this case, when $E_1$ is greater than or equal to 0.6, it is determined that the driver has rich driving experience. It should be understood that a, b, and c may alternatively be set to other real numbers, and a determining condition may alternatively change with a weight value. This is not specifically limited in this application.

In some possible implementations, a final result of the driving experience satisfies the following: $E_2 = a \times A + b \times D + c \times T + d \times P$, where P is a result determined based on the parking duration, and P may be separately set to 0 or 1. When P is set to 1, it indicates that the determining result is that "the driver has rich driving experience". When P is set to 0, it indicates that "the driver has insufficient driving experience". Herein, d is a weight of the result determined based on the parking duration. For example, a, b, c, and d may be respectively set to 0.4, 0.3, 0.2, and 0.1. In this case, when $E_2$ is greater than or equal to 0.5, it is determined that the driver has rich driving experience.

In some possible implementations, the driving experience of the driver may alternatively be determined based on at least one of acceleration smoothness (acceleration smoothness), deceleration smoothness (deceleration smoothness), and turning smoothness (turning smoothness). For example, a value interval of acceleration smoothness (or deceleration smoothness, or turning smoothness) of a historical passing vehicle on a road section on which the vehicle currently travels is determined. Further, if acceleration smoothness (or deceleration smoothness, or turning smoothness) of the ego vehicle in the current trip is in the first y% of the value interval of the acceleration smoothness on the current road section, it is determined that the driver has rich driving experience; otherwise, it is determined that the driver has insufficient driving experience. For example, x may be 50, or may be 60, or may be any real number between 0 and 100. For example, the driving experience of the driver may alternatively be determined by comprehensively considering the acceleration smoothness, the deceleration smoothness, and the turning smoothness. For example, a formula for calculating the deceleration smoothness may be as follows: $DS=\lambda s(Mm|T)$, where Mm is a brake pedal position, T is brake action duration, and $\lambda s$ is a smoothness equation. It should be understood that the acceleration smoothness and the turning smoothness may also be calculated according to the foregoing formula.

In some possible implementations, a driving habit of the current driver may be represented by a driving habit score $Score_{(Driving\ Habits)}$. For example, $Score_{(Driving\ Habits)} = a_1 + a_2 + a_3 + a_4 + a_5$, where $a_1$ to as respectively represent weights of a vehicle speed, yielding, an inter-vehicle distance, temporary parking, and traffic regulations, which are specifically shown in Table 1. A value of each of $a_1$ to as may be any real number between 0 and 1. For example, when either a case in which ratios of speeding and aggressive turning are greater than 0.5 or a case in which a ratio of hard braking is greater than 0.5 occurs in the current trip, $a_1$ is set to 0; otherwise, $a_1$ is set to 1. When yielding is not performed on a specific road section in the current trip, $a_2$ is set to 0; otherwise, $a_2$ is set to 1. When a ratio of unsafe following in the current trip is greater than 0.5, $a_3$ is set to 0; otherwise, $a_3$ is set to 1. When temporary parking occurs in the current trip and road traffic is obstructed, $a_4$ is set to 0; otherwise, $a_4$ is set to 1. When a traffic regulation violation occurs in the current trip, for example, driving is not performed based on a lane line, an indicator, or a sign, as is set to 0; otherwise, as is set to 1. Further, when $Score_{(Driving\ Habits)}$ is greater than A, the driving habit of the driver is good; or when $Score_{(Driving\ Habits)}$ is less than or equal to A, the driving habit of the driver needs to be improved, where A is a good driving habit score. For example, A may be 3 or 4, or may be another value from 0 to 5.

**Table 1 Driving behavior of a driver and a weight of the driving behavior in a driving habit score**

| Type | Condition | Weight |
|---|---|---|
| **Vehicle speed** | Ratio of speeding and aggressive turning (aggressive turning) $t_{lateral\ acceleration\ rate>0.4\ g}/t_{lateral\ acceleration\ rate>0.2\ g}$; ratio of hard braking (hard braking) $t_{deceleration\ rate>0.3\ g}/t_{deceleration\ rate>0.1\ g}$; speeding in rainy, snowy, or foggy days; speeding during congestion; and vehicle speeding when there are pedestrians around | $a_1$ |
| **Yielding** | Yielding to pedestrians in schools, communities, and villages; yielding to pedestrians, bicycles, and motorcycles in rainy or snowy days; yielding to left-turn vehicles at right-turn intersections; yielding at intersections without signal lights; yielding at roundabouts; yielding upon entering main roads; yielding on ramps; yielding based on traffic signs and marking lines; yielding when the vehicle is overtaken; and yielding when encountering special vehicles (such as police cars, fire engines, ambulances, engineering rescue vehicles, and school buses). | $a_2$ |
| **Inter-vehicle distance** | **Ratio** of unsafe following (unsafe following), $t_{headway<1s}/t_{headway<3s}$ | $a_3$ |
| **Temporary parking** | Temporary parking obstructs road traffic | $a_4$ |
| **Traffic regulations** | Traffic regulation violation, failure to follow lane lines, indicators, signs, and the like | $a_5$ |

In some possible implementations, when there are one or more fixed drivers of the vehicle, the driving experience and the driving habit of the driver may be further determined based on a driver profile (driver profile). Further, when the driving habit is determined, the driving habit score may be as follows: $Score_{(Driving\ Habits)} = a_1 + a_2 + a_3 + a_4 + a_5 + a_6$, where $a_6$ is a weight occupied by another driving behavior, for example, an FCW and a quantity of times of forced exit of intelligent driving. When a quantity of times of forward collision warning and/or the quantity of times of forced exit of intelligent driving exceed/exceeds a preset threshold, $a_6$ is set to 0; otherwise, $a_6$ is set to 1.

In some possible implementations, when there are one or more fixed drivers of the vehicle, non-standard driving behaviors of each driver may be separately counted in a preset trip. For example, quantities of times that a driver A has speeding, non-yielding, unsafe following, incorrect temporary parking, and traffic regulation violations are separately recorded. For example, the preset trip may be of 500 km or 1000 km, or may be of another value.

S303: Determine whether it is true that the driver has rich driving experience and a good driving habit.

Specifically, when it is not true that the driver has rich driving experience and a good driving habit, S304 is performed; otherwise, S305 is performed.

It should be understood that, that "it is not true that the driver has rich driving experience and a good driving habit" includes the following: The driver has rich driving experience but a poor driving habit; the driver has a good driving habit but insufficient driving experience; and the driver has insufficient driving experience and a poor driving habit.

S304: Provide a driving reminder and/or a driving recommendation.

For example, vehicle surrounding environment information is obtained, and content and an occasion of the driving reminder and/or the driving recommendation are determined based on the vehicle surrounding environment information. In some possible implementations, a vehicle speed reminder and/or recommendation, a right-of-way reminder and/or recommendation, a driving observation reminder and/or recommendation, an inter-vehicle distance reminder and/or recommendation, a temporary/prohibited parking reminder and/or recommendation, and another driving violation reminder may be provided.

For example, a driving reminder and/or a driving recommendation may be provided by using a display apparatus like a central control screen; or a driving reminder and/or a driving recommendation may be provided in a voice broadcast manner or the like; or a driving reminder and/or a driving recommendation may be provided through a human-computer interaction interface like an HMI. This is not specifically limited in this embodiment of this application.

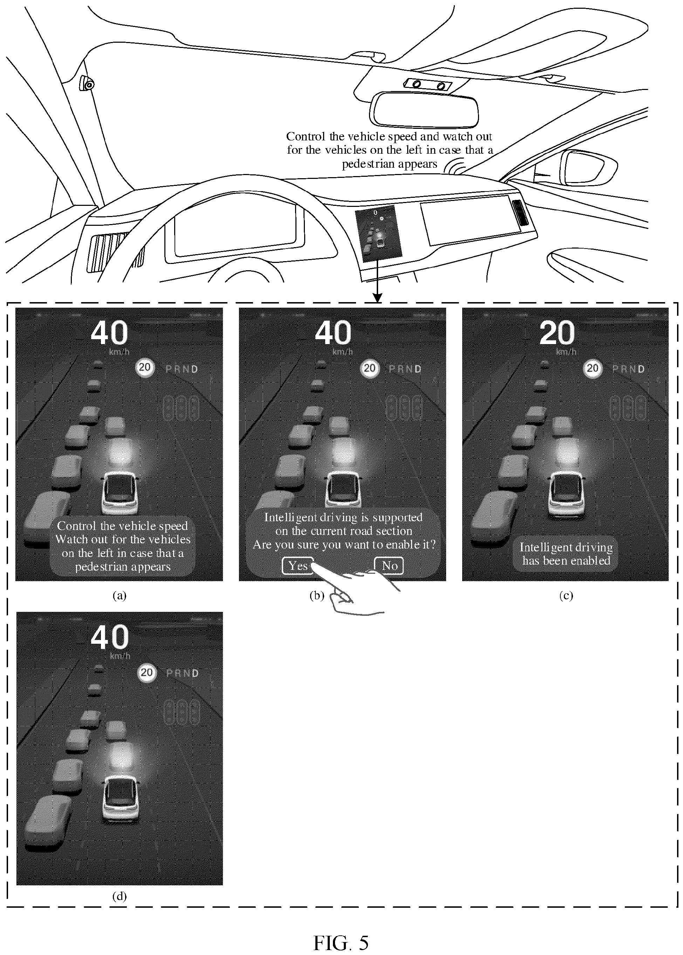

In an example, the driver is reminded of an observed driving speed and/or a recommended driving speed based on a road condition risk and a brake distance. For example, in rainy, snowy, or foggy days or another low visibility weather condition, a driving reminder and/or a driving recommendation are/is provided. For example, the driver is reminded to reduce a speed, or the driver is reminded of a recommended vehicle speed, for example, the driver is reminded of "A recommended vehicle speed does not exceed 20 km/h" by using a display apparatus and/or in a voice broadcast manner. In a case of road congestion, a pedestrian around, a curve, or the like, the driver is reminded to reduce a speed, or the driver is reminded of a recommended vehicle speed. When the driver is about to enter a main road, the driver is reminded of a recommended route and vehicle speed. In some possible implementations, the driver may be further prompted to enable intelligent driving. In the foregoing scenario, the driver may be further reminded of information such as a recommended gas pedal amplitude and frequency, and a brake amplitude and frequency by using a display apparatus and/or in a voice broadcast manner. As shown in FIG. 5, when the vehicle passes through a road section on which there are a plurality of parked vehicles on one side, a driver who has insufficient driving experience and/or a poor driving habit may be reminded, and a recommended speed is provided, to prevent an accident caused by sudden appearance of a pedestrian. Specifically, as shown in (a) in FIG. 5, a current driving speed of the vehicle is 40 km/h. When it is detected that a plurality of vehicles are parked on a left side, a pedestrian may appear from the middle of the parked vehicles. In this case, "Control the vehicle speed and watch out for the vehicles on the left in case that a pedestrian appears" may be displayed on the central control screen. In addition, a recommended vehicle speed "⑳" may be further displayed on the central control screen. In some possible implementations, "⑳" may be displayed in a blinking manner, to improve conspicuousness of the recommended vehicle speed. In some possible implementations, a driving recommendation may be further provided in combination with vibration of a device like a steering wheel, a seat belt, or a seat, and/or blinking of a breathing light (or an atmosphere light) in the vehicle, so that the driving recommendation can better attract attention of the driver.

In some possible implementations, when it is determined that the driver has insufficient driving experience and/or a poor driving habit, the central control screen may also be used to recommend that the driver should enable intelligent driving. Specifically, as shown in (b) in FIG. 5, "The current road section supports intelligent driving. Are you sure you want to enable it?" is displayed on the central control screen. The driver may confirm to enable intelligent driving by tapping an "OK" button on the screen, or may not enable intelligent driving by tapping a "No" button on the screen. Further, after intelligent driving is enabled in response to the tap operation of the driver, an autonomous driving module of the vehicle takes over the vehicle, controls a driving speed of the vehicle to decrease to 20 km/h, and prompts, by using a screen, the driver that "Intelligent driving has been enabled", as shown in (c) in FIG. 5.

In some possible implementations, the foregoing recommended vehicle speed may be sensed and regulated by an autonomous driving system, or may be received through vehicle to infrastructure (vehicle to infrastructure, V2I) communication, or may be determined in another manner. Further, the reminded gas pedal amplitude and frequency, the recommended brake amplitude and frequency, and the like may be calculated based on the recommended vehicle speed, or may be determined in another manner.

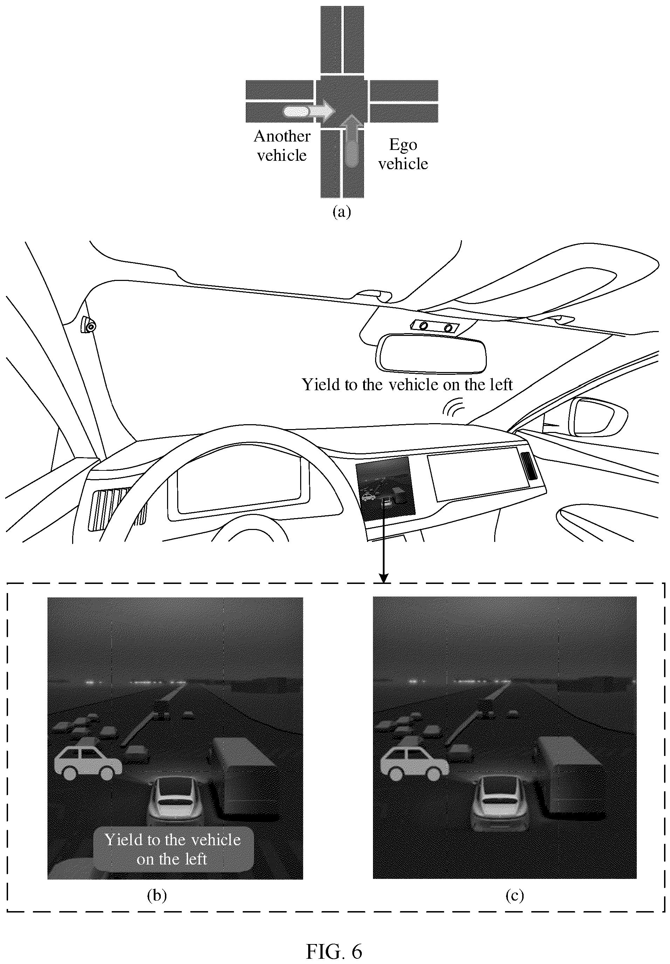

In another example, the driver is prompted to perform yielding on a specific road section. For example, the driver is prompted to yield to pedestrians in schools, communities, and villages; yield to pedestrians, bicycles, and motorcycles in rainy and snowy days; yield to left-turn vehicles at right-turn intersections; yield at intersections without signal lights; yield at roundabouts; yield upon entering main roads; yield on ramps; yield based on traffic signs and marking lines; yield when the vehicle is overtaken; and yield when encountering special vehicles (such as police cars, fire engines, ambulances, engineering rescue vehicles, and school buses). As shown in (a) in FIG. 6, at an intersection without a signal light, when it is detected that there is a vehicle driving from left to right at the intersection, for a driver who has insufficient driving experience and/or a poor driving habit, a reminder "Yield to the vehicle on the left" shown in (b) in FIG. 6 may be provided. For a driver who has rich driving experience and a good driving habit, no reminder may be provided, and the central control screen is controlled to display a picture shown in (c) in FIG. 6.

In some possible implementations, a location of another road user may be obtained by using a vehicle sensing system, or may be determined based on information received through V2I, or may be determined based on information received through vehicle to vehicle (vehicle to vehicle, V2V) communication, or may be determined in another manner.

In another example, in a restricted parking area like a railway station or a roadside of an airport terminal building, a prompt of parking duration is provided. If a lane is blocked, a reminder is provided and an automatic adjustment option is provided. When parking is performed on a ramp, a front wheel is rotated to prevent slipping. In a prohibited parking area (according to traffic laws), a reminder is provided, and a surrounding parking lot and a parking space are recommended.

In some possible implementations, information such as the parking duration, the recommended surrounding parking lot, and the parking space may be determined based on information received through V2I, or may be determined based on information received through vehicle to everything (vehicle to everything, V2X), or may be determined in another manner.

In still another example, an inter-vehicle distance is recommended based on a road condition risk, a brake distance, a low visibility weather like rainy, snowy, or foggy days, congestion, a pedestrian around, and a curve. When another road user like a large vehicle, a parked vehicle, a bicycle, a motorcycle, a school bus, or a pedestrian, are encountered, a prompt of keeping an inter-vehicle distance is provided.

In some possible implementations, the recommended inter-vehicle distance may be preset by a system. For example, the recommended inter-vehicle distance is separately set for different scenarios such as a low visibility weather like rainy, snowy, or foggy days, congestion, a pedestrian around, and a curve. Alternatively, the recommended inter-vehicle distance may be determined in another manner.

In some possible implementations, when there are one or more fixed drivers of the vehicle, and the driving experience and the driving habit of the driver are determined based on a driver profile (driver profile), personalized reminders may be further provided for different drivers. For example, the driver A is a driver who has insufficient driving experience and/or a poor driving behavior. However, in a preset trip (for example, 1000 km, or another value), the driver A has never performed a behavior of not yielding on a specific road section. In this case, no reminder may be provided on the road section that requires yielding.

S305: Provide no driving reminder and/or driving recommendation.

For example, when it is determined that the driver has rich driving experience and a good driving habit, a driving reminder may not be provided in a travelling process, to reduce energy consumption.

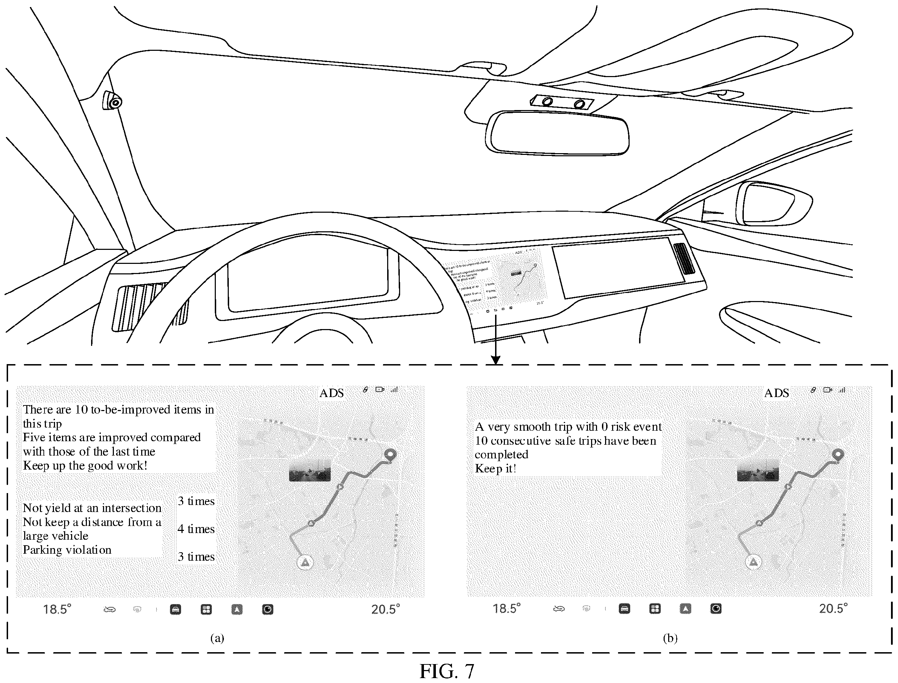

In some possible implementations, according to the driving assistance method provided in this embodiment of this application, statistics about a type and/or a quantity of occurrences of the non-standard driving behaviors may be further collected in each trip, and a trip summary and a reminder are provided. For example, in one trip, poor driving behaviors include "not yielding at an intersection", "not keeping a distance from a large vehicle", and "parking violation"; and quantities of occurrences of the foregoing behaviors are respectively 3, 4, and 3. In this case, when the trip ends, reminder information shown in (a) in FIG. 7 is displayed, to help a driver understand driving performance of the driver and deepen an impression. Optionally, a comparison may be made between the quantities of occurrences of the foregoing behaviors and a quantity of poor driving behaviors recorded in a historical trip, to prompt the driver with a change (for example, "Five items are improved compared with those of the last time") of the non-standard driving behaviors compared with that in the historical trip, to promote formation of a good driving habit, and keep safe driving vigilance. If there is no poor driving behavior in the trip process, only a trip route may be displayed, or a quantity of times that the driver completes a zero-risk trip may be displayed, to motivate the driver to continue to keep a good driving habit. For example, content shown in (b) in FIG. 7 may be displayed: "A very smooth trip with 0 risk event. 10 consecutive safe trips have been completed. Keep it!" It should be understood that the driver may alternatively be prompted with the foregoing information in a voice broadcast manner or the like.

In embodiments of this application, terms such as "rich", "good", "insufficient", and "poor" are introduced for ease of understanding and description, and shall not constitute any limitation on this application.

Embodiments of this application provide a driving assistance method, to obtain driving data of a driver in real time, determine, based on the driving data, whether to provide a driving reminder, and determine reminder content based on vehicle surrounding environment information and/or vehicle driving status data. This can help a driver who has a poor driving habit and/or insufficient driving experience learn and/or consolidate driving experience, improve driving experience of the driver, and further help improve driving safety. Particularly, in the field of shared vehicles, a driver who uses a specific vehicle may be different each time, and accordingly, has different driving experience and a different driving habit. In this case, driving data is obtained in real time, to determine driving experience and a driving habit of a driver, and further provide a driving reminder. This helps improve driving safety.

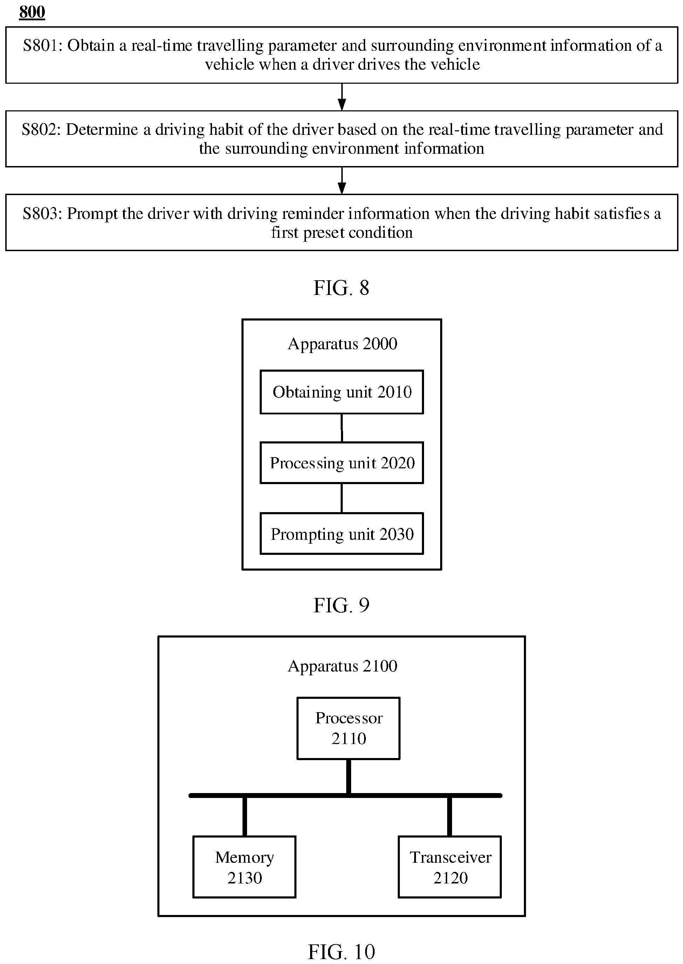

FIG. 8 is a schematic flowchart of a driving assistance method 800 according to an embodiment of this application. The method 800 may be applied to the vehicle shown in FIG. 1, or may be performed by the system shown in FIG. 2. It should be understood that steps or operations of the driving assistance method shown in FIG. 8 are merely examples for description. In this embodiment of this application, other operations or variations of the operations in FIG. 8 may be further performed. The method 800 includes the following steps.

S801: Obtain a real-time travelling parameter and surrounding environment information of a vehicle when a driver drives the vehicle.

For example, the vehicle may be the vehicle 100 in the foregoing embodiment, or may be another vehicle. The real-time travelling data may include the driving data in the foregoing embodiment, or may include the vehicle travelling status data in the foregoing embodiment, or may include a vehicle travelling parameter when another driver drives the vehicle. The surrounding environment information may be the vehicle surrounding environment information in the foregoing embodiment, or may include other surrounding environment information of the vehicle in a travelling process of the vehicle.

For a method for obtaining the real-time travelling parameter and the surrounding environment information, refer to descriptions in the foregoing embodiment. Details are not described herein again.

S802: Determine a driving habit of the driver based on the real-time travelling parameter and the surrounding environment information.

For example, the driving habit may include the driving habit described in the foregoing embodiment. For a method for determining the driving habit of the driver based on the real-time travelling parameter and the surrounding environment information, refer to descriptions in the foregoing embodiment. Details are not described herein again.

S803: Prompt the driver with driving reminder information when the driving habit satisfies a first preset condition.

For example, the first preset condition may include: The driving habit score $Score_{(Driving\ Habits)}$ in the foregoing embodiment is less than the good driving habit score, or may be another condition that can represent a poor driving habit of the driver.

The driving reminder information may include the driving reminder and/or the driving recommendation in the foregoing embodiment, or may include at least one of the vehicle speed reminder, the right-of-way reminder, the driving observation reminder, the inter-vehicle distance reminder, the temporary/prohibited parking reminder, or the another driving violation reminder in the foregoing embodiment. More specifically, for a method for prompting the driver with the driving reminder information, refer to descriptions in the foregoing embodiment. Details are not described herein again.

In the foregoing technical solution, the driving habit of the driver can be determined based on the vehicle travelling parameter and the surrounding environment information of the vehicle that are obtained in real time when the driver drives the vehicle. Further, whether to provide a driving reminder in a driving process of the vehicle may be determined based on the driving habit of the driver. This can help a driver who has a poor driving habit learn and/or consolidate precautions that need to be taken in a driving process, help the driver form a good driving habit, and further help improve driving safety.

In embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

The methods provided in embodiments of this application are described above in detail with reference to FIG. 3 to FIG. 8. The following describes in detail an apparatus provided in embodiments of this application with reference to FIG. 9 and FIG. 10. Descriptions of apparatus embodiments correspond to the descriptions of the method embodiments. Therefore, for content that is not described in detail, refer to the method embodiments. For brevity, details are not described herein again.

FIG. 9 is a schematic block diagram of a driving assistance apparatus 2000 according to an embodiment of this application. The apparatus 2000 includes an obtaining unit 2010, a processing unit 2020, and a prompting unit 2030. The obtaining unit 2010 may implement a corresponding communication function. The processing unit 2020 is configured to perform data processing. The prompting unit 2030 is configured to prompt the driver with driving reminder information.

Optionally, the apparatus 2000 may further include a storage unit. The storage unit may be configured to store instructions and/or data. The processing unit 2020 may read the instructions and/or data in the storage unit, so that the apparatus implements the foregoing method embodiment.

The apparatus 2000 may include a unit configured to perform the method in FIG. 3 or FIG. 8. In addition, the units in the apparatus 2000 and the foregoing other operations and/or functions are respectively intended to implement corresponding procedures of the method embodiment in FIG. 3 or FIG. 8.

When the apparatus 2000 is configured to perform the method 800 in FIG. 8, the obtaining unit 2010 may be configured to perform S801 in the method 800, the processing unit 2020 may be configured to perform S802 in the method 800, and the prompting unit 2030 may be configured to perform S803 in the method 800.

Specifically, the apparatus 2000 includes: an obtaining unit 2010, configured to obtain a real-time travelling parameter and surrounding environment information of a vehicle when a driver drives the vehicle; a processing unit 2020, configured to determine a driving habit of the driver based on the real-time travelling parameter and the surrounding environment information; and a prompting unit 2030, configured to prompt the driver with driving reminder information when the driving habit satisfies a first preset condition.

In some possible implementations, the processing unit 2020 is further configured to determine driving experience of the driver based on the real-time travelling parameter. The prompting unit 2030 is specifically configured to prompt the driver with the driving reminder information when the driving habit satisfies the first preset condition and the driving experience satisfies a second preset condition.

In some possible implementations, the prompting unit 2030 is further configured to: prompt the driver with vehicle speed reminder information when it is detected that a vehicle speed of the vehicle exceeds a preset vehicle speed, where the vehicle speed reminder information reminds the driver of deceleration and/or a recommended vehicle speed; and/or prompt the driver with yielding indication information when another road user is detected, where the yielding indication information reminds the driver to yield to the another road user; and/or prompt the driver with inter-vehicle distance reminder information when a distance between the vehicle and a front vehicle is less than or equal to a preset distance, where the inter-vehicle distance reminder information reminds the driver to keep an inter-vehicle distance and/or reminds the driver of a recommended inter-vehicle distance; and/or prompt the driver with temporary parking reminder information when it is detected that the vehicle enters a restricted parking area, where the temporary parking reminder information reminds the driver of the restricted parking area and/or parking duration; and/or prompt the driver with driving observation reminder information when at least one of lane change of the vehicle, deceleration of the vehicle, another vehicle behind the vehicle, and an obstacle on a driving road is detected, where the driving observation reminder information prompts the driver to observe violation reminder information around the vehicle.

In some possible implementations, the prompting unit 2030 is further configured to: when a current trip ends, prompt data of non-standard driving occurring in the current trip, and/or prompt a result of comparison between the data of non-standard driving occurring in the current trip and data of non-standard driving occurring in a historical trip.

In some possible implementations, the non-standard driving includes at least one of the following: the distance between the vehicle and the front vehicle is less than or equal to the preset distance, non-yielding to another road user, a parking violation, speeding, and a traffic regulation violation.

In some possible implementations, when the vehicle travels to a first road section, and intelligent driving is supported on the first road section, the prompting unit 2030 is further configured to prompt the driver to switch the vehicle to an intelligent driving mode.

In some possible implementations, the processing unit 2020 is further configured to: before the prompting unit 2030 prompts the driver with driving reminder information, determine the driving reminder information based on the surrounding environment information.

In some possible implementations, the real-time travelling parameter includes a yielding parameter, and the yielding parameter represents a behavior of yielding to another road user by the vehicle in the current trip.

It should be understood that division of units in the apparatus is merely logical function division, and can be fully or partially integrated into a physical entity during actual implementation, or physically separated. In addition, the units in the apparatus may be implemented in a form in which a processor invokes software. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the foregoing units are implemented by designing a logical relationship between components in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the foregoing units. All units of the foregoing apparatus may be implemented in a form in which a processor invokes software, or implemented in a form of a hardware circuit, or some of the units are implemented in a form in which a processor invokes software, and remaining units are implemented in a form of a hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit. The logical relationship of the hardware circuit is fixed or reconfigurable. For example, the processor is a hardware circuit implemented by using an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that the units in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated together, or may be implemented independently. In an implementation, the units are integrated together and implemented in a form of a system-on-a-chip (system-on-a-chip, SOC). The SOC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

FIG. 10 is a schematic block diagram of a driving assistance apparatus according to an embodiment of this application. The driving assistance apparatus 2100 shown in FIG. 10 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, so that the transceiver 2120 receives/sends some parameters. Optionally, the memory 2130 may be coupled to the processor 2110 through an interface, or may be integrated with the processor 2110.

It should be noted that the transceiver 2120 may include but is not limited to a transceiver apparatus like an input/output interface (input/output interface), to implement communication between the apparatus 2100 and another device or a communication network.

In an implementation process, the steps of the foregoing methods may be completed by using an integrated logic circuit of hardware in the processor 2110, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 2130. The processor 2110 reads information in the memory 2130 and completes the steps of the foregoing methods in combination with hardware of the processor 2110. To avoid repetition, details are not described herein again.

The processor 2110 may be a general-purpose CPU, a microprocessor, an ASIC, a GPU, or one or more integrated circuits, and is configured to execute a related program, to implement the driving assistance method in the method embodiments of this application. The processor 2110 may be further an integrated circuit chip and has a signal processing capability. In a specific implementation process, steps of the driving assistance method in this application may be completed by using an integrated logic circuit of hardware in the processor 2110, or by using instructions in a form of software. Alternatively, the processor 2110 may be a general-purpose processor, a DSP, an ASIC, an FPGA or another programmable logic device, a discrete gate or transistor logic device, or a discrete hardware component. The processor may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 2130. The processor 2110 reads information in the memory 2130 and performs the driving assistance method in the method embodiments of this application in combination with hardware of the processor 2110.

The memory 2130 may be a read-only memory (read-only memory, ROM), a static storage device, a dynamic storage device, or a random access memory (random access memory, RAM).

The transceiver 2120 uses a transceiver apparatus, for example, but not limited to, a transceiver, to implement communication between the apparatus 2100 and another device or a communication network.

An embodiment of this application further provides a driver assistant. The driver assistant includes at least one of a virtual image and a physical image. The driver assistant includes at least one processor, configured to execute a computer program stored in a memory, so that the driver assistant performs the method in FIG. 3 or FIG. 8. The driver assistant may be carried on at least one of a vehicle-mounted screen, a head-up display HUD, a cockpit, and a vehicle-mounted voice apparatus.

An embodiment of this application further provides an advanced driver assistance system. The system includes the foregoing apparatus 2000 or the foregoing apparatus 2100.

An embodiment of this application further provides an intelligent vehicle. The intelligent vehicle may include the foregoing apparatus 2000 or the foregoing apparatus 2100.

An embodiment of this application further provides a computer-readable medium. The computer-readable medium stores program code, and when the computer program code is run on a computer, the computer is enabled to perform the method in FIG. 3 or FIG. 8.

An embodiment of this application further provides a chip, including at least one processor and a memory. The at least one processor is coupled to the memory, and is configured to read and execute instructions in the memory, to perform the method in FIG. 3 or FIG. 8.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part that contributes to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A driving assistance method, comprising:

   obtaining a real-time travelling parameter and surrounding environment information of a vehicle when a driver drives the vehicle;
   determining a driving habit of the driver based on the real-time travelling parameter and the surrounding environment information; and
   prompting the driver with driving reminder information when the driving habit satisfies a first preset condition.

2. The method according to claim 1, wherein the method further comprises:

   determining driving experience of the driver based on the real-time travelling parameter; and
   the prompting the driver with driving reminder information when the driving habit satisfies a first preset condition comprises:
   prompting the driver with the driving reminder information when the driving habit satisfies the first preset condition and the driving experience satisfies a second preset condition.

3. The method according to claim 1 or 2, wherein the prompting the driver with driving reminder information comprises:

   prompting the driver with vehicle speed reminder information when it is detected that a vehicle speed of the vehicle exceeds a preset vehicle speed, wherein the vehicle speed reminder information reminds the driver of deceleration and/or a recommended vehicle speed; and/or

prompting the driver with yielding indication information when another road user is detected, wherein the yielding indication information reminds the driver to yield to the another road user; and/or

prompting the driver with inter-vehicle distance reminder information when a distance between the vehicle and a front vehicle is less than or equal to a preset distance, wherein the inter-vehicle distance reminder information reminds the driver to keep an inter-vehicle distance and/or reminds the driver of a recommended inter-vehicle distance; and/or

prompting the driver with temporary parking reminder information when it is detected that the vehicle enters a restricted parking area, wherein the temporary parking reminder information reminds the driver of the restricted parking area and/or parking duration; and/or

prompting the driver with driving observation reminder information when at least one of lane change of the vehicle, deceleration of the vehicle, another vehicle behind the vehicle, and an obstacle on a driving road is detected, wherein the driving observation reminder information prompts the driver to observe violation reminder information around the vehicle.

4. The method according to any one of claims 1 to 3, wherein the method further comprises:
when a current trip ends, prompting data of non-standard driving occurring in the current trip, and/or prompting a result of comparison between the data of non-standard driving occurring in the current trip and data of non-standard driving occurring in a historical trip.

5. The method according to claim 4, wherein the non-standard driving comprises at least one of the following: the distance between the vehicle and the front vehicle is less than or equal to the preset distance, non-yielding to another road user, a parking violation, speeding, and a traffic regulation violation.

6. The method according to any one of claims 1 to 5, wherein when the vehicle travels to a first road section, and intelligent driving is supported on the first road section, the method further comprises:
prompting the driver to switch the vehicle to an intelligent driving mode.

7. The method according to any one of claims 1 to 6, wherein before the prompting the driver with driving reminder information, the method further comprises:
determining the driving reminder information based on the surrounding environment information.

8. The method according to any one of claims 1 to 7, wherein the real-time travelling parameter comprises a yielding parameter, and the yielding parameter represents a behavior of yielding to another road user by the vehicle in the current trip.

9. A driving assistance apparatus, comprising:

an obtaining unit, configured to obtain a real-time travelling parameter and surrounding environment information of a vehicle when a driver drives the vehicle;
a processing unit, configured to determine a driving habit of the driver based on the real-time travelling parameter and the surrounding environment information; and
a prompting unit, configured to prompt the driver with driving reminder information when the driving habit satisfies a first preset condition.

10. A driving assistance apparatus, comprising:

a memory, configured to store a computer program; and
a processor, configured to execute the computer program stored in the memory, so that the apparatus performs the method according to any one of claims 1 to 9.

11. A driver assistant, wherein the driver assistant comprises at least one of a virtual image and a physical image, and the driver assistant comprises:
a processor, configured to execute a computer program stored in a memory, so that the driver assistant performs the method according to any one of claims 1 to 9, wherein the driver assistant may be carried on at least one of a vehicle-mounted screen, a head-up display HUD, a vehicle-mounted voice apparatus, and a cockpit.

12. An intelligent vehicle, comprising the apparatus according to claim 9 or 10, or the driver assistant according to claim 11.

**13.** A computer-readable storage medium, wherein the computer-readable storage medium stores a computer program, and when the computer program is executed by a computer, the method according to any one of claims 1 to 9 is implemented.

**14.** A chip, wherein the chip comprises a processor and a data interface, and the processor reads, through the data interface, instructions stored in a memory, to perform the method according to any one of claims 1 to 9.

Vehicle 100

Sensing system 120

Display apparatus 130

Computing platform 150

Processor 151

Processor 152

...

Processor 15n

FIG. 1

Driving virtual assistant unit

Learning unit

Learning application unit

Learning method unit

Data management module

User interaction module

Control module

Data obtaining module

FIG. 2

**300**

S301: Obtain driving data of a driver

S302: Determine driving experience and a driving habit of the driver

S303: Whether the driver has rich driving experience and a good driving habit ——— Yes ———

No

S304: Provide a driving reminder and/or a driving recommendation

S305: Provide no driving reminder and/or driving recommendation

FIG. 3

Deceleration rate Gaussian model

Novice driver

Deceleration rate/m·s$^{-2}$

Experienced driver

Brake duration/s

0.012
0.01
0.008
0.006
0.004
0.002
0

0    0.002    0.004    0.006    0.008    0.01    0.012

FIG. 4

Control the vehicle speed and watch out for the vehicles on the left in case that a pedestrian appears

**40** km/h

Control the vehicle speed
Watch out for the vehicles
on the left in case that a
pedestrian appears

(a)

**40** km/h

Intelligent driving is supported
on the current road section
Are you sure you want to enable it?

Yes    No

(b)

**20** km/h

Intelligent driving
has been enabled

(c)

**40** km/h

(d)

FIG. 5

Another vehicle

Ego vehicle

(a)

Yield to the vehicle on the left

Yield to the vehicle on the left

(b)

(c)

FIG. 6

There are 10 to-be-improved items in this trip
Five items are improved compared with those of the last time
Keep up the good work!

| | |
|---|---|
| Not yield at an intersection | 3 times |
| Not keep a distance from a large vehicle | 4 times |
| Parking violation | 3 times |

ADS

18.5°　　　　　　　　　　　　20.5°

(a)

A very smooth trip with 0 risk event
10 consecutive safe trips have been completed
Keep it!

ADS

18.5°　　　　　　　　　　　　20.5°

(b)

FIG. 7

**800**

S801: Obtain a real-time travelling parameter and surrounding environment information of a vehicle when a driver drives the vehicle

↓

S802: Determine a driving habit of the driver based on the real-time travelling parameter and the surrounding environment information

↓

S803: Prompt the driver with driving reminder information when the driving habit satisfies a first preset condition

FIG. 8

Apparatus 2000

Obtaining unit 2010

Processing unit 2020

Prompting unit 2030

FIG. 9

Apparatus 2100

Processor 2110

Memory 2130

Transceiver 2120

FIG. 10

## INTERNATIONAL SEARCH REPORT

| International application No. |
| --- |
| **PCT/CN2022/094524** |

**A. CLASSIFICATION OF SUBJECT MATTER**

B60W 40/09(2012.01)i

According to International Patent Classification (IPC) or to both national classification and IPC

**B. FIELDS SEARCHED**

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNTXT; CNKI; ENTXT: 驾驶, 习惯, 行驶, 参数, 环境, 提醒, drive, behavior, parameter, reminding, vechicle, auxiliary

**C. DOCUMENTS CONSIDERED TO BE RELEVANT**

| Category* | Citation of document, with indication, where appropriate, of the relevant passages | Relevant to claim No. |
| --- | --- | --- |
| X | CN 113619588 A (BEIJING HORIZON ROBOTICS TECHNOLOGY RESEARCH AND DEVELOPMENT CO., LTD.) 09 November 2021 (2021-11-09) description, paragraph 0050-paragraph 0158 | 1-14 |
| X | CN 112918472 A (AUDI AG) 08 June 2021 (2021-06-08) description, paragraph 0031-paragraph 0060 | 1-14 |
| X | CN 109050520 A (XIAOYI TECHNOLOGY CO., LTD.) 21 December 2018 (2018-12-21) description, paragraph 0027-paragraph 0063 | 1-14 |
| A | CN 106128099 A (ZEBRA INFORMATION TECHNOLOGY CO., LTD.) 16 November 2016 (2016-11-16) entire document | 1-14 |
| A | CN 104590274 A (ZHEJIANG GEELY AUTOMOBILE RESEARCH INSTITUTE CO., LTD. et al.) 06 May 2015 (2015-05-06) entire document | 1-14 |
| A | CN 111231973 A (BEIJING SIWEIZHILIAN TECHNOLOGY CO., LTD.) 05 June 2020 (2020-06-05) entire document | 1-14 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 September 2022** | **11 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/094524**

### C.    DOCUMENTS CONSIDERED TO BE RELEVANT

| Category* | Citation of document, with indication, where appropriate, of the relevant passages | Relevant to claim No. |
|---|---|---|
| A | CN 114516340 A (CHONGQING CHANG'AN AUTOMOBILE CO., LTD.) 20 May 2022 (2022-05-20)<br>entire document | 1-14 |
| A | CN 108137059 A (MITSUBISHI ELECTRIC CORP.) 08 June 2018 (2018-06-08)<br>entire document | 1-14 |
| A | JP 2009115717 A (PIONEER ELECTRONIC CORP.) 28 May 2009 (2009-05-28)<br>entire document | 1-14 |

Form PCT/ISA/210 (second sheet) (January 2015)

**INTERNATIONAL SEARCH REPORT**
Information on patent family members

International application No.

**PCT/CN2022/094524**

| Patent document cited in search report | | | Publication date (day/month/year) | Patent family member(s) | | | Publication date (day/month/year) |
|---|---|---|---|---|---|---|---|
| CN | 113619588 | A | 09 November 2021 | None | | | |
| CN | 112918472 | A | 08 June 2021 | None | | | |
| CN | 109050520 | A | 21 December 2018 | None | | | |
| CN | 106128099 | A | 16 November 2016 | None | | | |
| CN | 104590274 | A | 06 May 2015 | None | | | |
| CN | 111231973 | A | 05 June 2020 | None | | | |
| CN | 114516340 | A | 20 May 2022 | None | | | |
| CN | 108137059 | A | 08 June 2018 | US | 2019009773 | A1 | 10 January 2019 |
| | | | | WO | 2017072894 | A1 | 04 May 2017 |
| | | | | DE | 112015007069 | T5 | 19 July 2018 |
| | | | | JP | WO2017072894 | A1 | 21 December 2017 |
| JP | 2009115717 | A | 28 May 2009 | None | | | |

Form PCT/ISA/210 (patent family annex) (January 2015)